# DEMANDE DE BREVET EUROPEEN

(11) **EP 1 882 601 A1**
(43) Date de publication de la demande: **30.01.2008**
(21) Numéro de dépôt: 07290873.4
(22) Date de dépôt: 11.07.2007
(51) Int. Cl.: B60G 15/06

(54) **Butée de suspension et jambe de suspension pourvue d'une telle butée**

(30) Priorité: 26.07.2006 FR 0606853
(71) Demandeur: S.N.R. ROULEMENTS, 74000 Annecy (FR)
(72) Inventeur: Corlet, Fabien, 74270 Argonay (FR); Lebrun-Damiens, Laurent, 74600 Seynod (FR)
(74) Mandataire: Broydé, Marc

(57) **Abrégé**

Une jambe de suspension d'un véhicule est pourvue d'un ressort à boudin (10) et d'un amortisseur télescopique, et d'une butée de suspension. La butée comporte un palier de butée (24), un élément d'appui supérieur (18) pour transmettre les efforts de l'amortisseur télescopique et du palier à une superstructure du véhicule, un élément d'appui inférieur (38) en matière synthétique pour transmettre à la rondelle inférieure les efforts exercés par le ressort, un couvercle (22) protégeant le palier et disposé entre la rondelle supérieure et l'élément d'appui supérieur, ainsi qu'un bloc de filtration (32, 60) des vibrations du ressort. Le palier est pourvu d'une rondelle métallique inférieure (28) tournant par rapport à une rondelle métallique supérieure (26). Le couvercle (22) est disposé entre la rondelle supérieure et l'élément d'appui supérieur et délimite avec l'élément d'appui inférieur un logement pour le palier. Le bloc de filtration est disposé entre la rondelle supérieure et le couvercle ou intégré au couvercle.

## Description

### DOMAINE TECHNIQUE DE L'INVENTION

L'invention se rapporte à une butée de suspension pour une jambe de suspension de véhicule, notamment pour une jambe de suspension télescopique de roue directrice de véhicule automobile, pourvue d'éléments de filtration des vibrations transmises par le ressort et par l'amortisseur télescopique à la superstructure du véhicule.

### ETAT DE LA TECHNIQUE ANTÉRIEURE

Dans le document FR 2 793 732 est décrit un dispositif de fixation supérieure d'une jambe de suspension à ressort à boudin et amortisseur télescopique pour roue directrice de véhicule automobile. Ce dispositif comporte un palier à roulement dont la rondelle inférieure forme un appui de ressort et la rondelle supérieure forme une âme cylindrique sur laquelle vient s'appuyer un tampon d'amortissement de la fin de course de l'amortisseur télescopique. Entre la rondelle inférieure et le ressort à boudin est interposée une masse élastomère qui recouvre, par exemple par moulage, la face interne de la rondelle tournée vers le boudin. Cette masse élastomère sert à la tenue et au filtrage de la spire supérieure du ressort. La masse élastomère est sollicitée non seulement dans le sens axial mais également en cisaillement, du fait des déformations et mouvements complexe de l'extrémité du ressort lors des déflexions. De plus, l'épaisseur de la masse élastomère n'est pas constante car elle compense le désaxage entre la tige d'amortisseur et le ressort à spirale, et cette épaisseur variable nuit au filtrage. Enfin, la masse élastomère est directement exposée aux pollutions extérieures, et est en frottement constant contre la spire du ressort, ce qui provoque une usure rapide.

Dans le document US 6 257 605 est décrite une butée de suspension constituée d'un élément d'appui inférieur, d'un palier à roulement et d'un couvercle de logement du palier, pourvu d'une jupe venant coopérer avec l'élément d'appui inférieur pour définir un joint d'étanchéité à labyrinthe. La butée ainsi constituée forme un sous-ensemble qui est monté entre le ressort à boudin et un élément d'appui supérieur constituant l'interface avec la superstructure du véhicule. Entre le couvercle et l'appui supérieur est interposé un bloc d'amortissement annulaire. Ce bloc n'est toutefois pas intégré au sous-ensemble constitué par la butée, ce qui n'est pas optimal en terme d'intégration de fonctions.

### EXPOSÉ DE L'INVENTION

L'invention vise donc à remédier aux inconvénients de l'état de la technique, de manière à proposer une butée de suspension qui forme un sous-ensemble unitaire compact incluant la fonction de filtration des vibrations du ressort dans un environnement protégé.

A cet effet, l'invention a pour objet un dispositif de butée de suspension pour une jambe de suspension d'un véhicule, la jambe étant pourvue d'un ressort à boudin et d'un amortisseur télescopique, le dispositif comportant :
- un palier de butée pourvu d'une rondelle métallique inférieure tournant par rapport à une rondelle métallique supérieure ;
- un élément d'appui supérieur pour transmettre les efforts de l'amortisseur télescopique et du palier à une superstructure du véhicule, l'élément d'appui supérieur étant pourvu d'un bloc de filtration des vibrations de l'amortisseur télescopique ;
- un élément d'appui inférieur en matière synthétique pour transmettre à la rondelle inférieure les efforts exercés par le ressort, l'élément d'appui inférieur comportant une zone annulaire d'appui de la rondelle inférieure et une zone annulaire d'appui du ressort ;
- un couvercle disposé entre la rondelle supérieure et l'élément d'appui supérieur, et délimitant avec l'élément d'appui inférieur un logement pour le palier; et
- un bloc de filtration des vibrations du ressort, disposé entre la rondelle supérieure et le couvercle ou intégré au couvercle.

La présence de deux éléments de filtration, l'un dédié aux vibrations transmises par l'amortisseur télescopique et l'autre au ressort, permet d'adapter individuellement chaque élément de filtration. Le bloc de filtration des vibrations du ressort peut ainsi être relativement compact, car les vibrations du ressort nécessitant une filtration sont dans un domaine fréquentiel relativement élevé, au-delà de 30 Hz, en particulier dans le domaine de fréquence entre 40 et 100 HZ.

La butée de suspension constitue un sous-ensemble préassemblé incluant la fonction de filtration du ressort et la filtration des vibrations de l'amortisseur.

Du fait de son positionnement au-dessus de la rondelle supérieure, le bloc de filtration des vibrations du ressort est interposé entre des pièces qui sont fixes en rotation par rapport à l'élément d'appui supérieur et à la superstructure du véhicule. Le bloc de filtration n'est soumis à aucun couple et peut être optimisé pour des sollicitations essentiellement axiales. De plus, le bloc peut le cas échéant de filtrer également les vibrations engendrées par le palier lui-même.

Selon un mode de réalisation, le bloc de filtration est disposé entre la rondelle supérieure et le couvercle. Cette disposition permet de protéger davantage le bloc de filtration des pollutions extérieures. Elle facilite également le montage.

On peut également prévoir que le couvercle soit en matériau élastomère et constitue l'appui supérieur.

Préférentiellement, le couvercle est pourvu d'une jupe recouvrant sans contact une zone périphérique de l'élément d'appui et délimitant avec la zone périphérique de l'élément d'appui un labyrinthe annulaire, disposé radialement à l'extérieur du logement et reliant le logement à l'extérieur.

### BRÈVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente, en coupe axiale, une butée d'une jambe de suspension selon un premier mode de réalisation de l'invention ;
- la figure 2 représente, en coupe axiale, une butée d'une jambe de suspension selon un deuxième mode de réalisation de l'invention.

Pour alléger la présentation, les éléments communs aux différents modes de réalisation seront désignés par les mêmes signes de référence et leur description ne sera pas systématiquement répétée.

### DESCRIPTION DETAILLEE D'UN MODE DE RÉALISATION

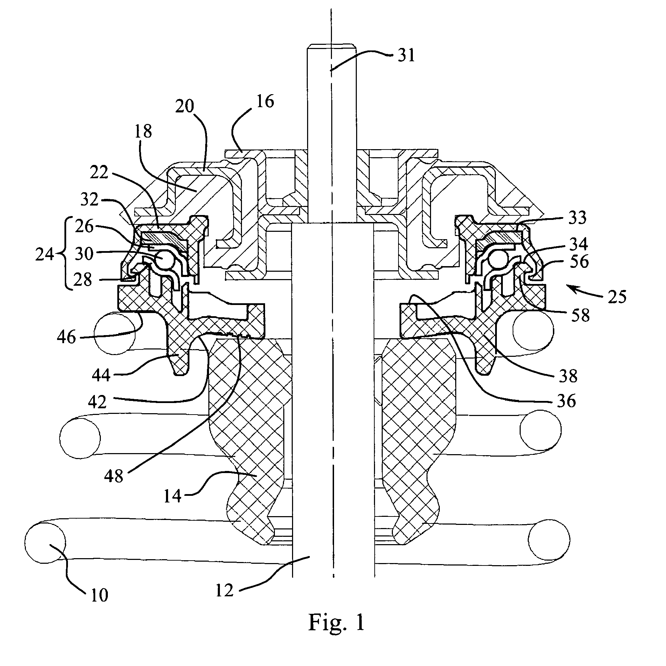

En référence à la figure 1, une jambe de suspension télescopique comporte un ressort à boudin 10, un amortisseur télescopique dont seule la tige 12 est visible, et un tampon amortisseur de chocs 14, ces éléments étant disposés entre une roue et la caisse d'un véhicule. La tige 12 de l'amortisseur est fixée à son extrémité supérieure par l'intermédiaire d'une bride de liaison 16 à un bloc élastomère 18 renforcé par un insert métallique 20 et fixé, de manière connue en soi, à la structure d'un véhicule. Le bloc élastomère 18 constitue également un siège supérieur d'appui pour un couvercle 22 dans lequel est logé un palier à roulement 24 d'une butée de suspension 25.

Le palier 24 est constitué d'une rondelle supérieure 26 et d'une rondelle inférieure 28, toutes deux en acier embouti, et formant des chemins de roulement à contact oblique pour des corps roulants tels que des billes 30 ou des rouleaux coniques. Le palier définit ainsi un axe de rotation 31 de la butée. La rondelle supérieure 26 prend appui sur un bloc filtrant en matériau élastomère 32 lui-même en appui sur le fond 33 du couvercle 22. La rondelle inférieure 28 est en appui sur une zone d'appui 34 constituant un relief de positionnement à la surface supérieure 36 d'une pièce d'appui 38 en matériau synthétique. La pièce d'appui 38 comporte, du côté de sa surface inférieure 42, une jupe cylindrique 44 qui sépare un épaulement transversal extérieur 46 d'appui du ressort 10 et un épaulement transversal intérieur 48 d'appui du tampon amortisseur 14.

Le couvercle 22 délimite avec la pièce d'appui un logement pour le palier 24. Le couvercle 22 est pourvu d'une jupe 56 recouvrant sans contact une zone périphérique 58 de la pièce d'appui 38 et délimitant avec la zone périphérique 58 de la pièce d'appui un labyrinthe annulaire reliant le logement à l'extérieur.

Il est à noter que les rondelles 26, 28 constituant le palier 22 ont une rigidité élevée, qui permet de maintenir des jeux très faibles au niveau des pertes de charge. Ces rondelles 26, 28 sont préférentiellement constituées en tôle emboutie de 1,2 à 2 mm d'épaisseur. Dans l'exemple de réalisation, on a utilisé une tôle de 1,5 mm.

Le matériau élastomère constituant le bloc de filtration est choisi pour permettre une filtration efficace des modes propres de vibration du ressort, notamment dans un domaine fréquentiel situé entre 40 et 100 Hz. On a obtenu de bons résultats avec un anneau en caoutchouc entre 2 mm et 10 mm d'épaisseur, et plus particulièrement entre 3 mm et 5 mm.

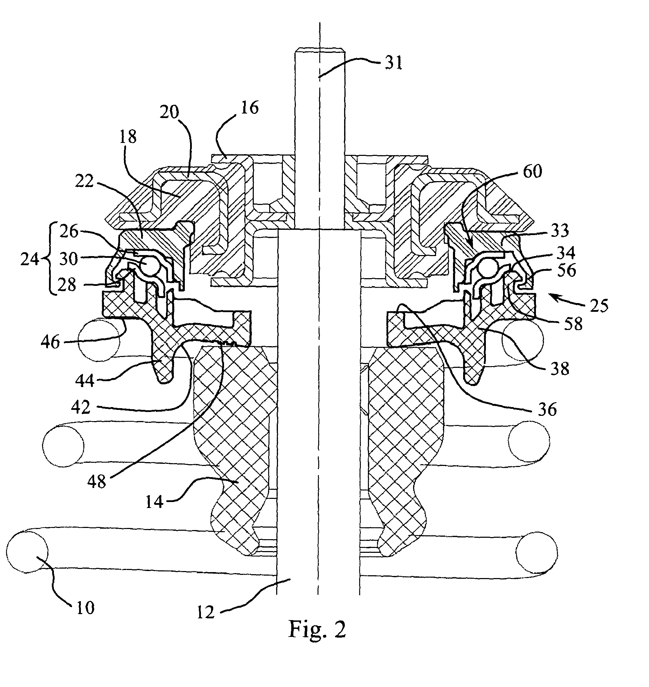

Un deuxième mode de réalisation de l'invention est représenté sur la figure 2. La butée de suspension de ce deuxième mode de réalisation diffère du premier mode de réalisation par l'absence de bloc filtrant, 32, celui-ci étant remplacé par une surépaisseur 60 du couvercle 22. Le couvercle est, dans ce mode de réalisation, réalisé en un matériau élastomère relativement rigide, permettant une bonne filtration des bruits transmis par le ressort.

Naturellement, diverses modifications sont possibles.

Les corps roulants peuvent être des rouleaux. Le palier à roulement peut être remplacé par un palier lisse.

La pièce d'appui inférieure peut être renforcée par un insert métallique. Sa face inférieure peut être partiellement recouverte d'une coupelle métallique.

Entre l'épaulement extérieur et le ressort peut être interposée l'extrémité annulaire d'une manchette en accordéon destinée à la protection de l'amortisseur contre les pollutions extérieures.

## Revendications

1. Dispositif de butée de suspension pour une jambe de suspension d'un véhicule, la jambe étant pourvue d'un ressort à boudin (10) et d'un amortisseur télescopique, le dispositif comportant :
- un palier de butée (24) pourvu d'une rondelle métallique inférieure (28) tournant par rapport à une rondelle métallique supérieure (26) ;
- un élément d'appui supérieur (18) pour transmettre les efforts de l'amortisseur télescopique et du palier à une superstructure du véhicule, l'élément d'appui supérieur étant pourvu d'un bloc de filtration des vibrations de l'amortisseur télescopique ;
- un élément d'appui inférieur (38) en matière synthétique pour transmettre à la rondelle inférieure les efforts exercés par le ressort, l'élément d'appui inférieur comportant une zone annulaire d'appui (34) de la rondelle inférieure et une zone annulaire d'appui (44) du ressort ;
- un couvercle (22) disposé entre la rondelle supérieure et l'élément d'appui supérieur, et délimitant avec l'élément d'appui inférieur un logement pour le palier; et
- un bloc de filtration (32, 60) des vibrations du ressort, disposé entre la rondelle supérieure et le couvercle ou intégré au couvercle.

2. Dispositif selon la revendication 1, **caractérisé en outre en ce que** le bloc de filtration (32) est disposé entre la rondelle supérieure et le couvercle.

3. Dispositif selon la revendication 1, **caractérisé en outre en ce que** le couvercle est en matériau élastomère et constitue l'appui supérieur.

4. Dispositif selon l'une quelconque des revendications précédentes, **caractérisé en outre en ce que** le couvercle est pourvu d'une jupe (22) recouvrant sans contact une zone périphérique (58) de l'élément d'appui et délimitant avec la zone périphérique de l'élément d'appui un labyrinthe annulaire, disposé radialement à l'extérieur du logement et reliant le logement à l'extérieur.

5. Dispositif selon l'une quelconque des revendications précédentes, **caractérisé en outre en ce que** le bloc filtrant est dimensionné de manière à amortir les vibrations dans un domaine fréquentiel s'étendant au moins entre 40 et 100 Hz.

6. Jambe de suspension d'un véhicule comportant un ressort à boudin (10), d'un amortisseur télescopique, et un dispositif de butée de suspension selon l'une quelconque des revendications précédentes.
